# FASCICULE DE BREVET EUROPEEN

(11) **EP 3 876 399 B1**
(45) Date de publication et mention de la délivrance du brevet: **29.11.2023**
(21) Numéro de dépôt: 21160990.4
(22) Date de dépôt: 05.03.2021
(51) Int. Cl.: H02K 9/04, H02K 9/16

(54) **MOTEUR COMPRENANT UN VENTILATEUR INTÉGRÉ**
MOTOR, DER EINEN INTEGRIERTEN LÜFTER UMFASST
MOTOR COMPRISING A BUILT-IN FAN

(30) Priorité: 06.03.2020 FR 2002263
(43) Date de publication de la demande: 08.09.2021
(73) Titulaire: ALSTOM Holdings, 93400 Saint-Ouen-sur-Seine (FR)
(72) Inventeur: BOUALEM, Benali, 25660 SAONE (FR)
(74) Mandataire: Lavoix

(56) Documents cités:
- DE-B- 1 000 104
- FR-A- 1 193 549
- FR-A1- 2 500 776
- US-A1- 2015 222 160

## Description

La présente invention concerne un moteur comprenant un stator principal, un rotor principal, et un arbre moteur principal, le moteur comprenant un ventilateur intégré comportant des pales mobiles en rotation autour d'un axe coaxial à l'arbre moteur principal.

Par « ventilateur intégré », il est entendu que le moteur comprend un boîtier délimitant un volume intérieur comprenant le stator principal, le rotor principal et une partie de l'arbre moteur et que le ventilateur est compris dans le volume intérieur délimité par le boîtier.

On connaît des moteurs comprenant un ventilateur intégré, dans lesquels le ventilateur est fixé à l'arbre du moteur et comporte des pales mobiles en rotation autour de l'arbre moteur. Ainsi, la rotation de l'arbre moteur entraîne la rotation du ventilateur.

De tels moteurs présentent cependant des inconvénients. En effet, le ventilateur étant fixé à l'arbre moteur, lorsque la vitesse de l'arbre moteur augmente, le bruit occasionné par le ventilateur augmente, ce qui engendre des nuisances.

En outre, lorsque le moteur fonctionne à faible vitesse et avec un couple élevé, la ventilation peut être insuffisante.

Un autre exemple de moteur de traction ventilé connu comprend un motoventilateur déporté hors du moteur et placé perpendiculairement à l'arbre du moteur s'étendant suivant une direction longitudinale. Une gaine d'arrivée d'air est placée entre le ventilateur et le moteur perpendiculairement à la direction longitudinale et débouchant dans des orifices longitudinaux aménagés dans le stator.

Cependant, un tel moteur à ventilateur déporté est encombrant et cela rend difficile son intégration dans un véhicule et en particulier sur un bogie.

FR1193549A décrit une machine électrique fermée refroidie par un flux d'air de refroidissement intérieur et un flux d'air de refroidissement extérieur, comprenant un moteur auxiliaire monté coaxialement sur la machine et portant des ventilateurs fixés à l'arbre du moteur, l'un pour le flux d'air intérieur et l'autre pour le flux d'air extérieur.

FR2500776A1 divulgue une électro-broche d'usinage à moteur synchrone à rotor à aimants permanents équipée d'un système de refroidissement par circulation forcée d'air. Le système de refroidissement comprend un ventilateur axial monté sur l'arbre du rotor d'un moteur asynchrone

DE1000104B divulgue un moteur comprenant un ventilateur. Le ventilateur, qui est conçu comme un ventilateur axial, comporte deux étages de ventilateur superposés radialement qui transportent l'air dans des directions opposées et qui sont traversés successivement par le liquide de refroidissement en circulation. Le ventilateur aspire le flux d'air de refroidissement de la machine électrique dans un premier étage, puis l'inverse et le renvoie dans la machine électrique via le deuxième étage sur un trajet parallèle.

L'un des buts de l'invention est de pallier les inconvénients cités ci-dessus, en proposant notamment un moteur à ventilateur intégré plus compact et performant que les moteurs à ventilateur intégré de l'état de la technique.

A cet effet, la présente invention a pour objet un moteur selon la revendication 1.

Le moteur selon l'invention peut comprendre l'une ou plusieurs des caractéristiques suivantes, prise(s) isolément ou suivant toute combinaison techniquement possible :
- l'arbre moteur principal s'étend suivant une direction longitudinale, le moteur présentant, suivant cette direction longitudinale, un côté d'entraînement destiné à être agencé du côté d'un équipement à entraîner, et un côté opposé à l'entraînement, et l'arbre moteur auxiliaire du moteur auxiliaire est disposé dans le prolongement de l'arbre moteur principal suivant la direction longitudinale, du côté opposé à l'entraînement ;
- le ventilateur comprend une structure dépourvue d'orifices de passage d'air, et dans lequel les pales et les pales secondaires sont orientées vers des côtés opposés du moteur.

L'invention a également pour objet un véhicule, notamment ferroviaire, comprenant un moteur selon l'invention.

L'invention sera mieux comprise à la lecture de la description qui va suivre, donnée uniquement à titre d'exemple et faite en se référant aux dessins annexés sur lesquels :
- **[****Fig.1****]** la figure 1 est une demi vue en coupe longitudinale d'un moteur comprenant un ventilateur intégré et un moteur auxiliaire selon un mode de réalisation non revendiqué ;
- **[****Fig.2****]** la figure 2 est une vue de détail de la figure 1 montrant le moteur auxiliaire ;
- **[****Fig.3****]** la figure 3 est une vue de côté du moteur de la figure 1 du côté opposé à l'entraînement ;
- **[****Fig.4****]** la figure 4 est une demi vue en coupe longitudinale d'un moteur comprenant un ventilateur intégré et un moteur auxiliaire selon un mode de réalisation de l'invention ;
- **[****Fig.5****]** la figure 5 est une vue de détail de la figure 4 montrant le moteur auxiliaire ;
- **[****Fig.6****]** la figure 6 est une vue de côté du moteur de la figure 4 vu du côté opposé à l'entraînement ;
- **[****Fig.7****]** la figure 7 est une vue de côté du moteur de la figure 4 du côté opposé à l'entraînement vu du côté d'entraînement;
- **[****Fig.8****]** la figure 8 est une vue schématique du ventilateur intégré du moteur de la figure 4 ;
- **[****Fig.9****]** la figure 9 est une demi vue en coupe longitudinale d'un moteur comprenant un ventilateur intégré et un moteur auxiliaire selon un troisième mode de réalisation de l'invention ; et

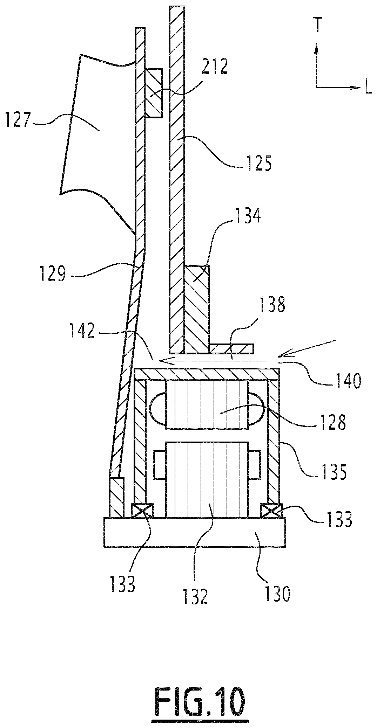

- **[****Fig.10****]** la figure 10 est une vue de détail de la figure 9 montrant le moteur auxiliaire.

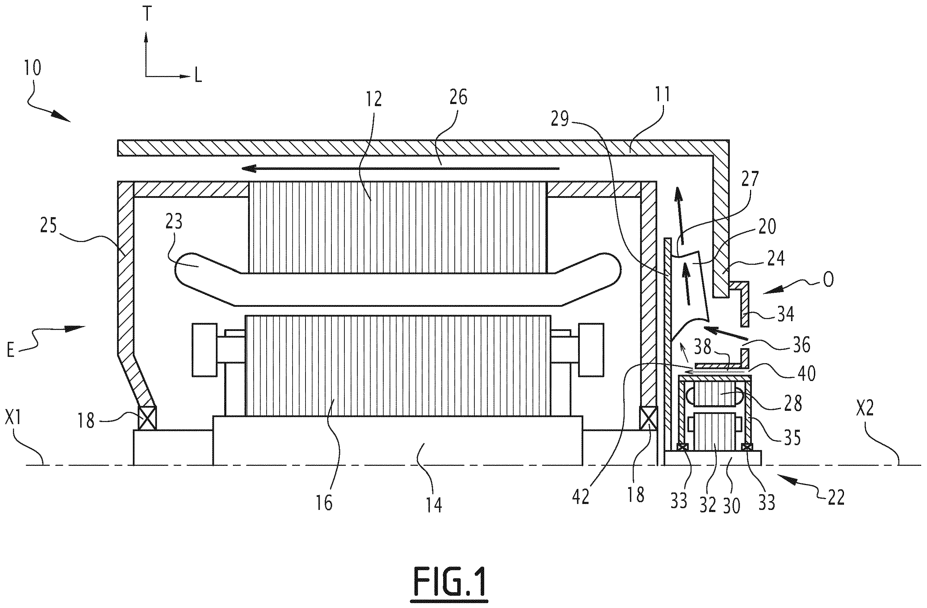

La Figure 1 représente un moteur 10 selon un mode de réalisation non revendiqué.

Le moteur 10 est de préférence un moteur de traction.

Le moteur 10 est par exemple un moteur de véhicule terrestre, aérien ou nautique. De préférence, le moteur 10 est un moteur de véhicule terrestre, en particulier un véhicule de transport public ou une automobile.

Le véhicule de transport public est par exemple un véhicule ferroviaire, un tramway, ou un autobus.

Dans les exemples décrits, le véhicule de transport public est un véhicule ferroviaire.

Le moteur 10 comprend un bâti principal 11, un stator principal 12, un arbre moteur principal 14, un rotor principal 16 fixé à l'arbre moteur principal 14, un ventilateur intégré 20 et un moteur auxiliaire 22 associé au ventilateur 20.

L'arbre moteur principal est guidé en rotation à l'aide de roulements 18 montés sur le stator principal 12.

L'arbre moteur principal 14 s'étend principalement suivant une direction longitudinale L et il est mobile en rotation autour d'un axe X1 parallèle à la direction longitudinale L.

Le moteur 10 présente, suivant la direction longitudinale L, un côté d'entraînement E destiné à être agencé du côté d'un équipement à entraîner et un côté opposé à l'entraînement O.

Le rotor principal 16 entoure l'arbre moteur principal 14. Le stator principal 12 entoure le rotor principal 16 et porte un ensemble de bobines 23.

Par exemple, le moteur 10 comprend un flasque d'entrée d'air 24 du côté opposé à l'entraînement O.

Par exemple, le moteur 10 comprend un flasque de sortie d'air 25 du côté d'entraînement E.

Le flasque d'entrée d'air 24 et le flasque de sortie d'air 25 s'étendent principalement suivant une direction transversale T perpendiculaire à la direction longitudinale L.

Le moteur 10 présente typiquement une pluralité de canaux de ventilation 26 sensiblement parallèles à la direction longitudinale L.

Les canaux de ventilation 26 sont délimités dans le bâti principal 11 à l'extérieur du stator principal 12, notamment autour du stator principal 12.

Le ventilateur 20 est placé du côté opposé à l'entraînement O. Le ventilateur 20 comporte des pales 27 mobiles en rotation autour d'un axe X2 coaxial à l'arbre moteur principal 14. Les pales 27 sont par exemple disposées sur une structure 29 du ventilateur 20 en forme générale de disque.

Les pales 27 sont orientées vers le côté opposé à l'entraînement O du moteur 10. De préférence, les pales 27 sont disposées à intervalles réguliers.

Par exemple, le ventilateur 20 comprend douze pales 27. En variante non représentée, le ventilateur 20 comprend un nombre de pales 27 différent.

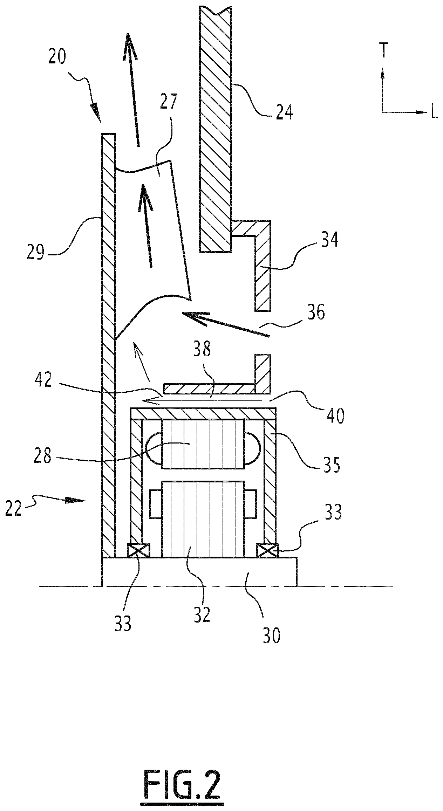

Le moteur auxiliaire 22 selon le premier mode de réalisation non revendiqué et représenté sur la Figure 2 comprend un stator auxiliaire 28, un rotor auxiliaire 32, et un arbre moteur auxiliaire 30 solidaire en rotation des pales 27 du ventilateur 20, fixé au rotor auxiliaire 32 coaxialement à l'arbre moteur principal 14, et guidé en rotation à l'aide de roulements auxiliaires 33 montés sur le stator auxiliaire 28.

De préférence, l'arbre moteur auxiliaire 30 est disposé dans le prolongement de l'arbre moteur principal 14 suivant la direction longitudinale L.

L'arbre moteur auxiliaire 30 est par exemple disposé à une distance de l'arbre moteur principal 14 comprise entre 1 mm et 5 mm.

De préférence, le moteur auxiliaire 22 présente des dimensions 5 à 10 fois inférieures aux dimensions du moteur 10.

Ainsi, le moteur auxiliaire 22 est compact et n'encombre pas le moteur 10.

Le ventilateur 20 selon le premier mode de réalisation non revendiqué fonctionne en flux poussé, c'est-à-dire qu'une mise en pression du ventilateur 20 fait circuler l'air en aval de la mise en pression depuis une zone d'entrée d'air située devant le flasque d'entrée d'air 24 vers l'arrière du flasque d'entrée d'air 24 puis dans les canaux de ventilation 26 du moteur 10.

De préférence, le moteur auxiliaire 22 comprend une pièce de fixation 34 du moteur auxiliaire 22 au bâti principal 11 du moteur 10.

Le moteur auxiliaire 22 comprend un bâti auxiliaire 35.

La pièce de fixation 34 du moteur auxiliaire 22 au bâti principal 11 du moteur 10 délimite au moins un orifice 36. L'orifice 36 permet à l'air d'entrer dans le moteur 10 et de le refroidir.

De préférence, la pièce de fixation 34 du moteur auxiliaire 22 au bâti principal 11 du moteur 10 délimite une pluralité d'orifices 36. Les orifices 36 ont typiquement une surface totale comprise entre 200 cm² et 1000 cm².

La pièce de fixation 34 du moteur auxiliaire 22 au moteur 10 délimite avec le bâti auxiliaire 35 au moins un canal 38 de refroidissement du moteur auxiliaire 22.

De préférence, le canal 38 de refroidissement du moteur auxiliaire 22 est sensiblement parallèle à la direction longitudinale L.

Le canal 38 de refroidissement du moteur auxiliaire 22 débouche à une première extrémité 40 à l'extérieur du moteur 10 du côté opposé à l'entraînement O.

Le canal 38 de refroidissement du moteur auxiliaire 22 débouche à une seconde extrémité 42 derrière le flasque d'entrée d'air 24.

De préférence, la pièce de fixation 34 du moteur auxiliaire 22 au moteur 10 délimite avec le bâti auxiliaire 35 une pluralité de canaux 38 de refroidissement du moteur auxiliaire 22 répartis régulièrement autour du bâti auxiliaire 35.

Les canaux 38 de refroidissement du moteur auxiliaire 22 présentent typiquement une section transversale de surface totale comprise entre 50 cm² et 200 cm².

De cette façon, lors de la mise en pression du ventilateur, le moteur 10 et le moteur auxiliaire 22 sont refroidis simultanément et par de l'air circulant dans la même direction, à savoir depuis le côté opposé à l'entraînement O vers le côté d'entraînement E du moteur 10.

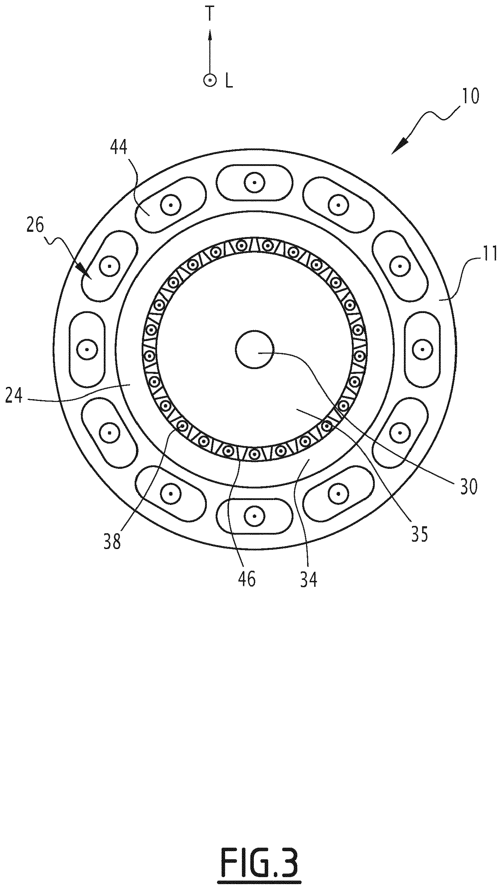

Le moteur 10 selon le premier mode de réalisation non revendiqué comprend, tel que représenté sur la Figure 3, de la périphérie vers le centre : le bâti principal 11 percé d'orifices 44 oblongs formant les canaux de ventilation 26, le flasque d'entrée d'air 24 du moteur 10, la pièce de fixation 34 du moteur auxiliaire 22 au moteur 10, le bâti auxiliaire 35 du moteur auxiliaire 22 formant des saillies 46 à sa périphérie, ces saillies 46 délimitant avec la pièce de fixation 34 les canaux 38 de refroidissement du moteur auxiliaire 22, et l'arbre moteur auxiliaire 30.

Sur la Figure 3, le cercle entourant un point représenté dans chaque canal de ventilation 26 et dans chaque canal de refroidissement 38 schématise le flux d'air traversant ces canaux.

Ainsi, le ventilateur 20 est utilisé à la fois pour créer un flux d'air principal pour refroidir le moteur 10 mais également un flux d'air secondaire pour refroidir le moteur auxiliaire 22 qui sert à son entraînement.

Ainsi, le ventilateur 20 permet une circulation du flux d'air principal depuis la zone d'entrée d'air, en passant successivement par les orifices 36, les pales 27 du ventilateur 20, puis au travers des canaux de ventilation 26, et en ressortant du côté d'entrainement E et une circulation du flux d'air secondaire depuis la zone d'entrée d'air, en passant successivement au travers des canaux de refroidissement 38, puis par les pales 27 du ventilateur 20, puis au travers des canaux de ventilation 26, et en ressortant du côté d'entrainement E. Les flux d'air principal et secondaire se rencontrent notamment au niveau du ventilateur 20 et de ses pales 27.

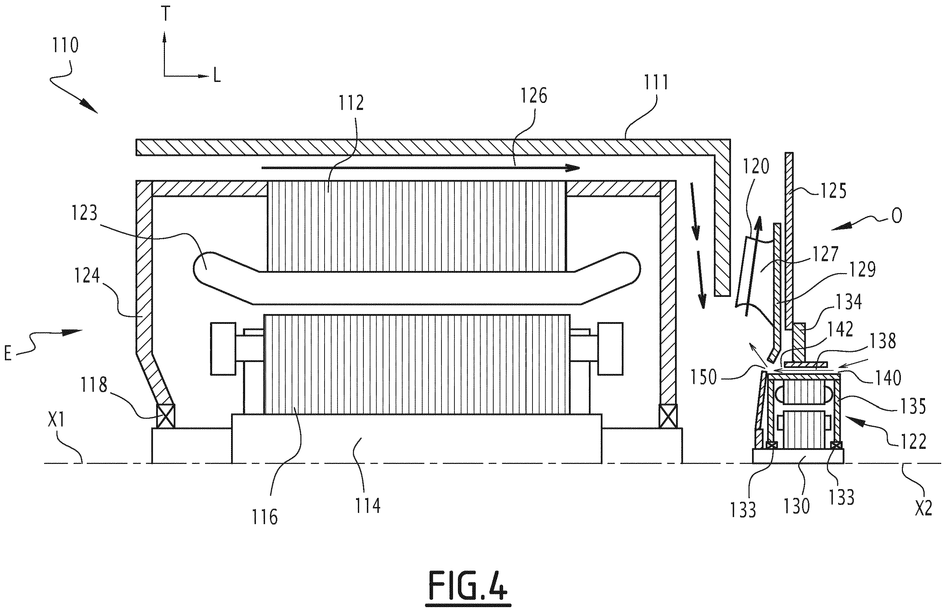

La Figure 4 représente un moteur 110 selon un deuxième mode de réalisation de l'invention, décrit par différence avec le premier mode de réalisation.

La numérotation des éléments communs au premier mode de réalisation est réalisée en ajoutant 100 à chaque référence numérique par rapport au premier mode de réalisation.

Le moteur 110 du deuxième mode de réalisation diffère principalement du moteur 10 du premier mode de réalisation en ce que le ventilateur 120 fonctionne en flux tiré.

Le moteur 110 comprend un flasque d'entrée d'air 124 du côté d'entraînement E.

Le moteur 110 comprend un flasque de sortie d'air 125 du côté opposé à l'entraînement O.

Les pales 127 du ventilateur 120 sont orientées vers le côté d'entraînement E du moteur 110.

L'arbre moteur auxiliaire 130 est par exemple disposé à une distance de l'arbre moteur principal 114 comprise entre 1 mm et 50 mm.

La pièce de fixation 134 est de préférence dépourvue d'orifices.

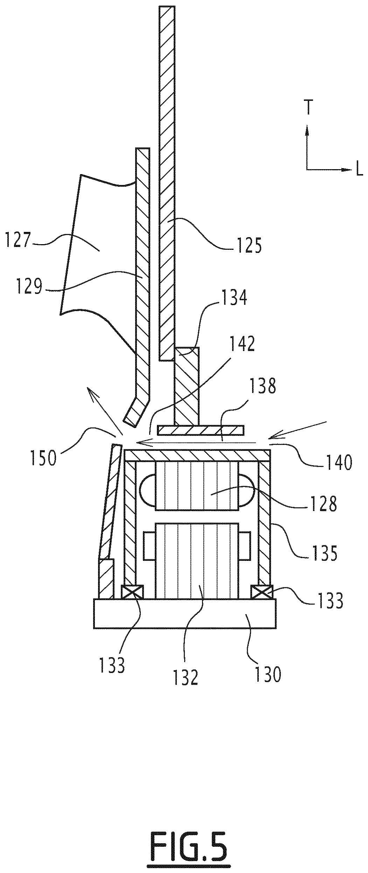

Comme visible sur la Figure 5, des orifices 150 sont ménagés dans la structure 129 du ventilateur 120. Les orifices 150 sont de préférence agencés pour être alignés avec chaque canal 138 de refroidissement du moteur auxiliaire 122 lorsque le ventilateur 120 fonctionne. Cela permet de créer une circulation d'air lors de la mise en pression du ventilateur 120.

Chaque canal 138 de refroidissement du moteur auxiliaire 122 débouche à une première extrémité 140 à l'extérieur du moteur 110 du côté opposé à l'entraînement O.

Chaque canal 138 de refroidissement du moteur auxiliaire 122 débouche à une seconde extrémité 142 derrière le flasque de sortie d'air 125, au niveau des orifices 150 et donc du ventilateur 120 et de ses pales 127.

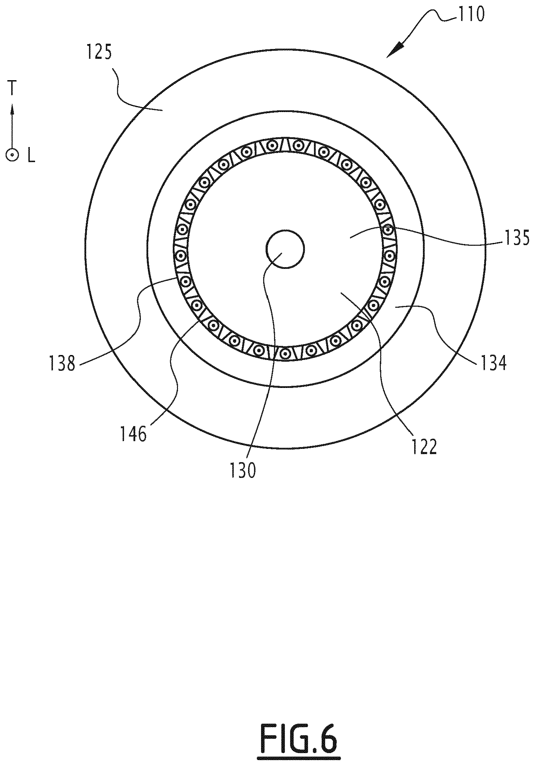

Le moteur 110 en coupe transversale représenté sur la Figure 6 comprend, de la périphérie vers le centre : le flasque de sortie d'air 125 du moteur 110, la pièce de fixation 134 du moteur auxiliaire 122 au moteur 110, le bâti auxiliaire 135 du moteur auxiliaire 122 formant des saillies 146 à sa périphérie, délimitant avec la pièce de fixation 134 les canaux 138 de refroidissement du moteur auxiliaire 122, et l'arbre moteur auxiliaire 130.

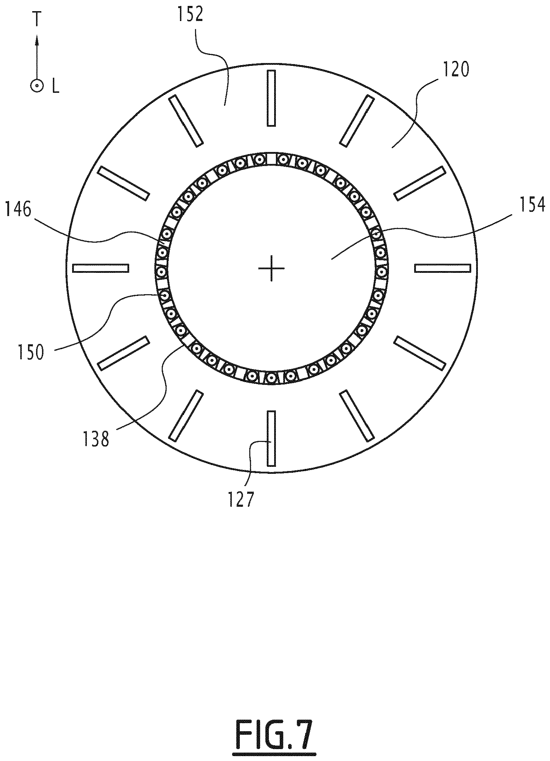

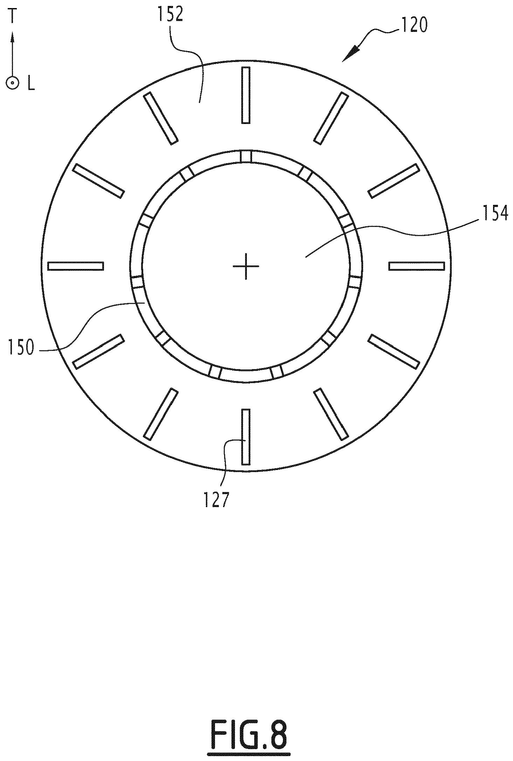

Les Figures 7 et 8 représentent plus en détail le ventilateur 120 et les pales 127. La structure 129 du ventilateur 120 présente une zone périphérique 152 pourvue des pales 127 et une zone centrale 154 dépourvue de pales.

Avantageusement, les orifices 150 ménagés dans la structure 129 du ventilateur 120 sont disposés entre la zone centrale 154 et la zone périphérique 152 de la structure 129 du ventilateur 120. Les orifices 150 ont typiquement une largeur prise entre la zone centrale 154 et la zone périphérique 152 comprise entre 5 mm et 20 mm.

En fonctionnement, le moteur auxiliaire 122 et le moteur 110 ont des entrées d'air distinctes ménagées sur des côtés opposés O, E du moteur 110, et une mise en pression du ventilateur 120 permet de tirer un flux d'air principal du côté d'entraînement E, opposé au ventilateur 120. Ce flux d'air principal passe successivement d'une zone d'entrée d'air située du côté d'entrainement, puis au travers des canaux de ventilation 126, entre le bâti principal 111 et le stator principal 112, puis traverse le ventilateur 120 jusqu'à une sortie d'air orientée perpendiculairement à la direction longitudinale L. Le flux d'air principal permet de refroidir le moteur 110.

En variante ou en complément (non représenté), le flux d'air principal passe entre le stator principal 112 et le rotor principal 116 si le moteur 110 est ouvert.

Un flux d'air secondaire passe dans le canal 138 de refroidissement du moteur auxiliaire 122.

Le flux d'air secondaire passe successivement d'une zone de captation d'air située du côté opposé à l'entrainement O, puis au travers des canaux de refroidissement 138, puis au travers des orifices 150, puis rejoint le flux principal au niveau du ventilateur 120 avant d'entrer en contact avec les pales 127, puis traverse le ventilateur 120 jusqu'à la sortie d'air orientée perpendiculairement à la direction longitudinale L.

Le flux d'air principal et le flux d'air secondaire se mélangent avant d'entrer en contact avec les pales 127 du ventilateur 120. Cela permet de limiter les perturbations du flux d'air total vu par le ventilateur 120, comme cela est représenté par les flèches sur la Figure 4.

Les deux flux d'air sont évacués à l'extérieur du moteur 110 sensiblement perpendiculairement à la direction longitudinale L.

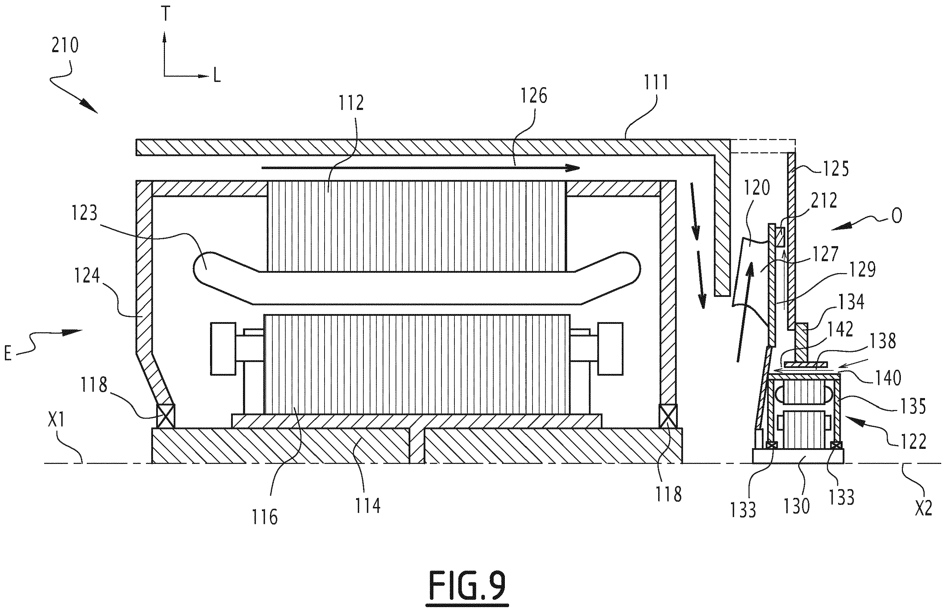

La Figure 9 représente un moteur 210 selon un troisième mode de réalisation de l'invention, qui est une variante du deuxième mode de réalisation.

Les éléments communs au deuxième mode de réalisation sont désignés par des références identiques.

Le moteur 210 du troisième mode de réalisation fonctionne en flux tiré.

Le moteur 210 du troisième mode de réalisation diffère notamment du moteur 110 du deuxième mode de réalisation en ce que le ventilateur 120 comporte, en plus des pales 127 orientées vers le côté d'entraînement E du moteur 210, des pales secondaires 212 orientées du côté opposé à l'entraînement O.

Les pales secondaires 212 sont disposées sur la structure 129 du ventilateur 120 du côté opposé aux pales 127.

Les pales secondaires 212 sont avantageusement plus petites que les pales 127, et sont destinées à ventiler le moteur auxiliaire 122.

Le moteur 210 du troisième mode de réalisation diffère également du moteur 110 du deuxième mode de réalisation en ce que la structure 129 du ventilateur 120 est dépourvue d'orifices.

Chaque canal 138 de refroidissement du moteur auxiliaire 122 débouche à une seconde extrémité 142 derrière le flasque de sortie d'air 125, au niveau de la structure 129 du ventilateur 120.

En fonctionnement, le moteur auxiliaire 122 et le moteur 210 ont des entrées d'air distinctes ménagées sur des côtés opposés O, E du moteur 210, et une mise en pression du ventilateur 120 permet de tirer un flux d'air principal du côté d'entraînement E, opposé au ventilateur 120. Ce flux d'air principal passe successivement d'une zone d'entrée d'air située du côté d'entrainement, puis au travers des canaux de ventilation 126, entre le bâti principal 111 et le stator principal 112, puis traverse le ventilateur 120 jusqu'à une sortie d'air orientée perpendiculairement à la direction longitudinale L. Le flux d'air principal permet de refroidir le moteur 110.

En variante ou en complément (non représenté), le flux d'air principal passe entre le stator principal 112 et le rotor principal 116 si le moteur 110 est ouvert.

Un flux d'air secondaire passe dans le canal 138 de refroidissement du moteur auxiliaire 122.

Le flux d'air secondaire passe successivement d'une zone de captation d'air située du côté opposé à l'entrainement O, puis au travers des canaux de refroidissement 138, puis au niveau du ventilateur 120 avant d'entrer en contact avec les pales secondaires 212, puis traverse le ventilateur 120 jusqu'à la sortie d'air orientée perpendiculairement à la direction longitudinale L.

Les deux flux d'air sont évacués à l'extérieur du moteur 110 sensiblement perpendiculairement à la direction longitudinale L.

Le moteur selon l'invention comprend donc un ventilateur intégré très compact et très performant. En outre, le ventilateur permet un refroidissement efficace du moteur auxiliaire afin de le rendre compact et intégrable dans un environnement contraint tel qu'un bogie.

## Revendications

1. Moteur (110, 210) comprenant un stator principal (112), un rotor principal (116), et un arbre moteur principal (114), le moteur (110, 210) comprenant un ventilateur (120) intégré comportant des pales (127) mobiles en rotation autour d'un axe (X2) coaxial à l'arbre moteur principal (114), et un moteur auxiliaire (122) associé au ventilateur (120), le moteur auxiliaire (122) comprenant un stator auxiliaire (128), un rotor auxiliaire (132), et un arbre moteur auxiliaire (130) solidaire en rotation des pales (127) du ventilateur (120), fixé au rotor auxiliaire (132) et guidé en rotation à l'aide de roulements auxiliaires (133) montés sur le stator auxiliaire (128), dans lequel l'arbre moteur principal (114) s'étend suivant une direction longitudinale (L), le moteur (110) présentant, suivant cette direction longitudinale (L), un côté d'entraînement (E) destiné à être agencé du côté d'un équipement à entraîner, et un côté opposé à l'entraînement (O), **caractérisé en ce que** :
- l'arbre moteur auxiliaire (130) du moteur auxiliaire (122) est disposé dans le prolongement de l'arbre moteur principal (114) suivant la direction longitudinale (L), du côté opposé à l'entraînement (O),
- le moteur (110, 210) comprend un bâti principal (111), et une pièce de fixation (134) du moteur auxiliaire (122) au bâti principal (111), le moteur auxiliaire (122) comprenant un bâti auxiliaire (135) définissant, avec la pièce de fixation (134), au moins un canal de refroidissement (138) du stator auxiliaire (128), dans lequel le ventilateur (120) est un ventilateur (120) à flux tiré,
- le bâti auxiliaire (135) et le bâti principal (111) ont des entrées d'air distinctes ménagées sur des côtés opposés (O, E) du moteur (110), le moteur (110) présentant une pluralité de canaux de ventilation (126), le ventilateur (120) comprenant une structure (129) délimitant une pluralité d'orifices (150) de passage d'air, et dans lequel une mise en pression du ventilateur (120) tire un flux d'air principal depuis l'entrée d'air du bâti principal (111) au travers des canaux de ventilation (126) du moteur (110) et génère un flux d'air secondaire depuis l'entrée d'air du bâti auxiliaire (135) au travers de chaque canal (38) de refroidissement du moteur auxiliaire (22) et des orifices (150) de passage d'air, ou
- le bâti auxiliaire (135) et le bâti principal (111) ont des entrées d'air distinctes ménagées sur des côtés opposés (O, E) du moteur (210), le moteur (210) présentant une pluralité de canaux de ventilation (126), le ventilateur (120) comprenant des pales secondaires (212), et dans lequel une mise en pression du ventilateur (120) tire un flux d'air principal depuis l'entrée d'air du bâti principal (111) au travers des canaux de ventilation (126) du moteur (210) et génère un flux d'air secondaire depuis l'entrée d'air du bâti auxiliaire (135) au travers de chaque canal (38) de refroidissement du moteur auxiliaire (22) et le long des pales secondaires (212).

2. Moteur (210) selon la revendication 1, dans lequel le ventilateur (120) comprend une structure (129) dépourvue d'orifices de passage d'air, et dans lequel les pales (127) et les pales secondaires (212) sont orientées vers des côtés opposés (O, E) du moteur (212).

3. Véhicule, notamment ferroviaire, comprenant un moteur (10, 110, 210) selon l'une quelconque des revendications précédentes.

## Patentansprüche

1. Motor (110, 210), umfassend einen Hauptstator (112), einen Hauptrotor (116) und eine Hauptantriebswelle (114), der Motor (110, 210) umfassend einen integrierten Lüfter (120) umfassend Schaufeln (127), die um eine Achse (X2) koaxial zu der Hauptantriebswelle (114) drehbar beweglich sind, und einen Hilfsmotor (122), der mit dem Lüfter (120) assoziiert ist, der Hilfsmotor (122) umfassend einen Hilfsstator (128), einen Hilfsrotor (132) und eine Hilfsmotorwelle (130), die drehfest mit den Schaufeln (127) des Lüfters (120) verbunden ist, der an dem Hilfsrotor (132) befestigt ist und mittels Hilfslagern (133), die an dem Hilfsstator (128) montiert sind, in Drehung geführt wird, wobei sich die Hauptantriebswelle (114) entlang einer Längsrichtung (L) erstreckt, wobei der Motor (110) entlang dieser Längsrichtung (L) eine Antriebsseite (E), die dazu bestimmt ist, auf der Seite eines anzutreibenden Geräts angeordnet zu sein, und eine dem Antrieb entgegengesetzte Seite (O) aufweist, **dadurch gekennzeichnet, dass**:
- die Hilfsantriebswelle (130) des Hilfsmotors (122) in der Verlängerung der Hauptantriebswelle (114) entlang der Längsrichtung (L) auf der dem Antrieb (O) gegenüberliegenden Seite angeordnet ist,
- der Motor (110, 210) einen Hauptrahmen (111) und ein Befestigungsteil (134) des Hilfsmotors (122) an dem Hauptrahmen (111) umfasst, der Hilfsmotor (122) umfassend einen Hilfsrahmen (135), der zusammen mit dem Befestigungsteil (134) mindestens einen Kühlkanal (138) des Hilfsstators (128) definiert, wobei der Lüfter (120) ein Ansauglüfter (120) ist,
- der Hilfsrahmen (135) und der Hauptrahmen (111) separate Lufteinlässe aufweisen, die auf gegenüberliegenden Seiten (O,E) des Hauptrahmens (110) ausgebildet sind, wobei der Motor (110) eine Vielzahl von Lüftungskanälen (126) aufweist, der Lüfter (120) umfassend eine Struktur (129), die eine Vielzahl von Luftdurchgangsöffnungen (150) begrenzt, und wobei eine Druckbeaufschlagung des Lüfters (120) einen Hauptluftstrom von dem Lufteinlass des Hauptrahmens (111) durch die Lüftungskanäle (126) des Motors (110) ansaugt und einen Sekundärluftstrom von dem Lufteinlass des Hilfsrahmens (135) durch jeden Kühlkanal (38) des Hilfsmotors (22) und die Luftdurchgangsöffnungen (150) erzeugt, oder
- der Hilfsrahmen (135) und der Hauptrahmen (111) separate Lufteinlässe aufweisen, die auf gegenüberliegenden Seiten (O, E) des Motors (210) ausgebildet sind, wobei der Motor (210) eine Vielzahl von Lüftungskanälen (126) aufweist, der Lüfter (120) umfassend sekundäre Schaufeln (212), und wobei eine Druckbeaufschlagung des Lüfters (120) einen Hauptluftstrom von dem Lufteinlass des Hauptrahmens (111) durch die Lüftungskanäle (126) des Motors (210) ansaugt und einen Nebenluftstrom von dem Lufteinlass des Hilfsrahmens (135) durch jeden Kühlkanal (38) des Hilfsmotors (22) und entlang der sekundären Schaufeln (212) erzeugt.

2. Motor (210) nach Anspruch 1, wobei der Lüfter (120) eine Struktur (129) ohne Luftdurchgangsöffnungen umfasst, und wobei die Schaufeln (127) und die sekundären Schaufeln (212) zu gegenüberliegenden Seiten (O, E) des Motors (212) gerichtet sind.

3. Fahrzeug, insbesondere Schienenfahrzeug, umfassend einen Motor (10, 110, 210) nach einem der vorherigen Ansprüche.

## Claims

1. A motor (110, 210) comprising a main stator (112), a main rotor (116), and a main motor shaft (114), the motor (110, 210) comprising an integrated fan (120) having blades (127) that can rotate about an axis (X2) coaxial with the main motor shaft (114), and an auxiliary motor (122) associated with the fan (120), the auxiliary motor (122) comprising an auxiliary stator (128), an auxiliary rotor (132), and an auxiliary motor shaft (130) rotationally fixed to the blades (127) of the fan (120), fixed to the auxiliary rotor (132) and guided in rotation by means of auxiliary bearings (133) mounted on the auxiliary stator (128), in which the main motor shaft (114) extends in a longitudinal direction (L), the motor (110) having, in this longitudinal direction (L), a drive side (E) intended to be arranged on the side of equipment to be driven, and a non-drive side (O), **characterised in that**:
- the auxiliary motor shaft (130) of the auxiliary motor (122) is arranged in the extension of the main motor shaft (114) in the longitudinal direction (L), on the opposite side to the drive (O),
- the motor (110, 210) comprises a main frame (111), and an attachment part (134) of the auxiliary motor (122) to the main frame (111), the auxiliary motor (122) comprising an auxiliary frame (135) defining, with the attachment part (134), at least one cooling channel (138) of the auxiliary stator (128), wherein the fan (120) is a pull-flow fan (120),
- the auxiliary frame (135) and the main frame (111) have separate air inlets provided on opposite sides (O, E) of the motor (110), the motor (110) having a plurality of ventilation channels (126), the fan (120) comprising a structure (129) defining a plurality of air passage orifices (150), and wherein pressurisation of the fan (120) draws a primary air flow from the air inlet of the main frame (111) through the ventilation channels (126) of the motor (110) and generates a secondary air flow from the air inlet of the auxiliary frame (135) through each cooling channel (38) of the auxiliary motor (22) and the air passage orifices (150), or
- the auxiliary frame (135) and the main frame (111) have separate air inlets provided on opposite sides (O, E) of the motor (210), the motor (210) having several ventilation channels (126), the fan (120) comprising secondary blades (212), and wherein pressurisation of the fan (120) draws a primary airflow from the air inlet of the main frame (111) through the ventilation channels (126) of the motor (210) and generates a secondary airflow from the air inlet of the auxiliary frame (135) through each cooling channel (38) of the auxiliary motor (22) and along the secondary blades (212).

2. A motor (210) according to claim 1, wherein the fan (120) comprises a structure (129) devoid of air passage orifices, and wherein the blades (127) and the secondary blades (212) are oriented towards opposite sides (O, E) of the motor (212).

3. A vehicle, in particular a rail vehicle, comprising a motor (10, 110, 210) according to any one of the preceding claims.
